# EUROPEAN PATENT SPECIFICATION

(11) **EP 3 359 329 B1**
(45) Date of publication and mention of the grant of the patent: **25.12.2019**
(21) Application number: 16784577.5
(22) Date of filing: 07.10.2016
(51) Int. Cl.: B23K 37/02, B23K 37/053, B23K 9/028, F16L 1/26, B23K 101/10

(54) **PIPE CRAWLING WELDING DEVICE WITH A ROTATABLY COUPLED WELDING MODULE ; METHOD OF WELDING PIPES WITH SUCH PIPE CRAWLING DEVICE**
ROHRKRIECHSCHWEISSVORRICHTUNG MIT EINEM DREHBAR GEKOPPELTEN SCHWEISSMODUL, VERFAHREN ZUM SCHWEISSEN VON ROHREN MIT EINER SOLCHEN ROHRKRIECHVORRICHTUNG
DISPOSITIF DE SOUDAGE SE DÉPLAÇANT À L'INTÉRIEUR D'UN TUYAU ET COMPORTANT UN MODULE DE SOUDAGE COUPLÉ ROTATIF ; PROCÉDÉ DE SOUDAGE DE TUYAUX UTILISANT UN TEL DISPOSITIF SE DÉPLAÇANT À L'INTÉRIEUR D'UN TUYAU

(30) Priority: 07.10.2015 WO PCT/EP2015/073181
(43) Date of publication of application: 15.08.2018
(73) Proprietor: ESAB AB, 402 77 Göteborg (SE)
(72) Inventor: LAGERKVIST, Arne, 412 82 Goteborg (SE)
(74) Representative: Murgitroyd & Company
(86) International application number: PCT/IB2016/056034
(87) International publication number: WO 2017/060878

(56) References cited:
- DE-B- 1 104 640
- JP-A- H09 141 436
- JP-U- S56 117 996
- US-A- 1 846 470
- US-A- 2 987 608

## Description

### Field of the Disclosure

Embodiments of the present disclosure relate generally to the field of welding devices, and more particularly to a welding device and a method of welding one or more pipe sections according to the preamble of claims 1 and 10 (see, for example, US2 987 608).

### Background of the Disclosure

Modern devices for performing submerged arc welding (SAW) within long segments of pipe often employ welding heads that are mounted on large, cantilevered static booms that are adapted to extend deep into pipe segments that are to be welded from the inside. For example, in order to weld two segments of pipe together in an axially abutting relationship, the boom of a conventional SAW device is extended longitudinally entirely through one of the pipe segments in order to position a welding head adjacent a joint between the abutting segments. It is therefore necessary for the boom to be at least as long as, or nearly as along as, the shorter of the two pipe segments to reach the joint.

SAW devices of the type described above are associated with a number of shortcomings. For example, the booms of such devices are generally quite long (e.g., over 10 meters), and therefore require a great deal of floor space within an operating environment, such as in a manufacturing facility, onboard a vessel, or in other settings in which space is at a premium. Furthermore, these types of SAW devices (booms) are generally very heavy (e.g., over 5000 kg), which can be disadvantageous in certain operating environments, such as in a manufacturing facility where the weight of the SAW device may require a custom built floor to handle the weight and momentum of the SAW device. Still further, these types of devices can only be used with a certain length of pipe because the booms bend under their own weight and the weight of the welding head, which can cause alignment problems and in worst cases mechanical and/or plastic deformation.

In view of the forging, it would be desirable to provide a SAW device for welding the interiors of elongated pipe segments wherein such device is relatively compact, lightweight, and inexpensive. It would further be desirable to provide such a SAW device that is not susceptible to significant vibration during a welding operation.

German patent document DE 1104640 discloses a welding apparatus for internally welding colliding pipes with a framework, which can be releasably secured in the pipe and in which the actual welding unit is rotatably mounted in a plane perpendicular to the pipe axis, so that the welding takes place under rotation of the pipes always at the lowest point of the tubes takes place, characterized in that the framework is provided in the tube movable and with means which cause its locking relative to the tube that the welding unit against the framework in the axial direction and radially displaceable and that means are provided for rotating and aixalen moving the unit relative to the framework.

US patent document US 2012/111837 discloses apparatus and methods of repairing an in-service pipeline, tank, and/or vessel. The process may be used in connection with a smart pig to perform in-situ internal repairs of in-service pipelines, tanks, and/or vessels. For example, a pipeline pig or other device is contemplated that employs an internal power supply, a navigation system, and a metal arc welding under oil system that is able to travel vast distances within a pipeline to reach pipeline segments that are either buried underground, under highways, or underwater making access very difficult.

US patent document US 2014/346163 A1 discloses a system for welding together segments of a pipeline. The system includes an external alignment mechanism for externally supporting and manipulating the orientation of pipe segments in order to align relative segments. The system also includes an internal welding mechanism for applying a weld to an interior face joint of the two abutted pipe segments. The internal welding mechanism including a torch for applying a weld, a laser for tracking the weld profile and guiding an articulating head of the torch, and a camera for visually inspecting the weld after the weld is applied.

US patent document US 1,846,470 discloses an apparatus for welding circumferential seams upon the inside of cylindrical vessels, a support, means for mounting the support inside the cylindrical vessel and an electric welding head pivotally mounted upon the support and adapted to hang substantially stationary therefrom.

US 4273985 A discloses a welder arranged inside pipes to be welded comprises a housing with the longitudinal axis thereof matched with the axis of the pipes. On the housing are a welding transformer and two mechanisms clamping the pipes, each having a drive moving the mechanism along the axis of the housing, and each being electrically connected to the transformer. The housing has mounted thereon a pipe flashing and upsetting mechanism with its own hydraulic drive, kinematically coupled to one of the pipe clamping mechanisms, a hydraulic pump supplying fluid to the drives, and a mechanism driving the welder along the pipes' axis. The housing carries two bearing discs secured at opposite ends and three clips mounted on roller supports and movable along the housing's axis. Two clips are incorporated in the first and second clamping mechanisms, respectively, and the third is part of the flashing and upsetting mechanism

### Summary of the Disclosure

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

A welding device according to the present invention is defined in claim 1. A method of welding one or more pipe sections according to the present invention is defined in claim 10.

### Brief Description of the Drawings

By way of example, specific embodiments of the disclosed device will now be described, with reference to the accompanying drawings, in which:
**FIG. 1** is a perspective view illustrating a pipe crawling welding device;
**FIG. 2** is side view of a roller unit of the pipe crawling welding device shown in **FIG. 1****;**
**FIG. 3** is perspective detail view illustrating a roller unit of the pipe crawling welding device shown in **FIG. 1****;**
**FIG. 4** is perspective detail view illustrating a welding module of the pipe crawling welding device shown in **FIG. 1****;**
**FIG. 5** is front perspective detail view illustrating a rotational coupling between a welding module and a crawler module of the pipe crawling welding device shown in **FIG. 1****;**
**FIG. 6** is rear perspective detail view illustrating a rotational coupling between a welding module and a crawler module of the pipe crawling welding device shown in **FIG. 1****;**
**FIG. 7** is side view illustrating the pipe crawling welding device of **FIG. 1** connected to various material, power, and data communication feeds;
**FIG. 8** is a flow diagram illustrating an exemplary method of using the pipe crawling welding device shown in **FIG. 1****;**
**FIGS. 9a****-d** are a series of schematic views illustrating several of the method steps set forth in the flow diagram of **FIG. 8****.**
**FIG. 10** is a cross sectional side view illustrating the pipe crawling welding device of **FIG. 1** with an optional clamping module attached to the crawler module.
**FIG. 11** is a partial, side view illustrating an exemplary pipe crawling welding device in accordance with the present invention located within first and second pipe sections;
**FIG. 12** is a partial, cross-sectional view of the pipe crawling welding device shown in **FIG. 11****;**
**FIG. 13** is a partial side view of the pipe crawling welding device shown in **FIG. 11****,** including a motor driven rack and pinion mechanism for coupling the boom to the crawler unit;
**FIG. 14A** is a frontal perspective view of the crawler module in **FIG. 11****;**
**FIG. 14B** is a rearward perspective view of the crawler module in **FIG. 11****;**
**FIG. 14C** is a cross-sectional view of the crawler module taken along line 15C-15C in **FIG. 14B****;**
**FIG. 15A** is a partial side view of the pipe crawling welding device in **FIG. 11****,** including the motor, rack and pinion;
**FIG. 15B** is a partial side view of the pipe crawling welding device in **FIG. 11** with the crawler module removed;
**FIGs. 16A-16H** are a plurality of views illustrating the pipe crawling welding device in use;
**FIG. 17** is a partial cross sectional view of the pipe crawling welding device shown in **FIG. 11** with a support and an angular adjustment mechanism located at a first end thereof;
**FIG.** 18 is a cross sectional side view illustrating the pipe crawling welding device of **FIG. 11** with a view of an optional alternate embodiment of a clamping module.

### Detailed Description

A device and method in accordance with the present disclosure will now be described more fully hereinafter with reference to the accompanying drawings, in which preferred embodiments of the device and method are shown. The disclosed device and method, however, may be embodied in many different forms and should not be construed as being limited to the embodiments set forth herein. Rather, these embodiments are provided so that this disclosure will be thorough and complete, and will fully convey the scope of the device and method to those skilled in the art. In the drawings, like numbers refer to like elements throughout.

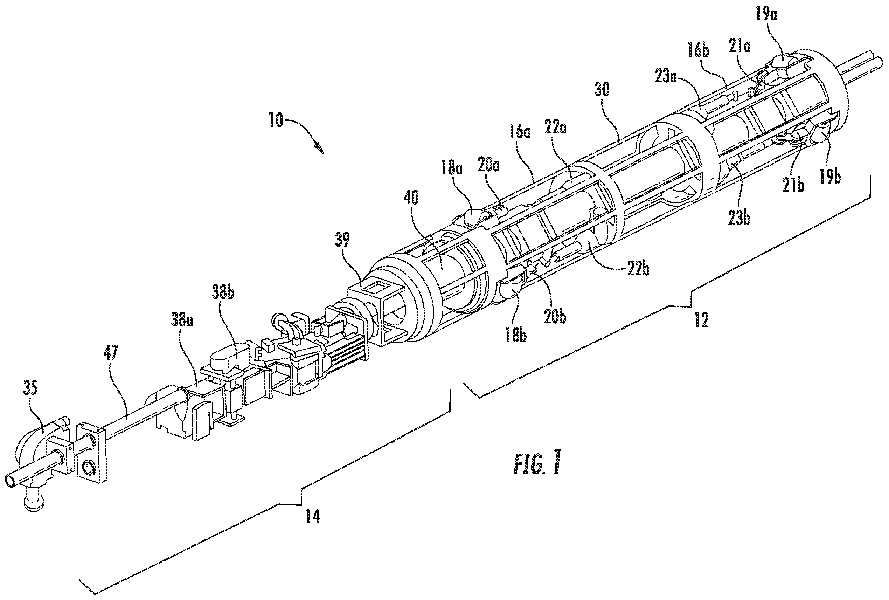

Referring to **FIG. 1****,** a pipe crawling welding device 10 (hereinafter "the device 10") is shown. For the sake of convenience and clarity, terms such as "front," "rear," "top," "bottom," "upper," "lower," "vertical," "horizontal," "lateral," "longitudinal," "height," and "width" may be used herein to describe the relative placement and orientation of the device 10 and its various components, each with respect to the geometry and orientation of the device 10 as it appears in **FIG. 1****.** Particularly, the longitudinal end of the device 10 nearer the lower left corner of **FIG. 1** shall be referred to as the "front" of the device and the longitudinal end of the device nearer the upper right corner of **FIG. 1** shall be referred to as the "rear" of the device. Said terminology will include the words specifically mentioned, derivatives thereof, and words of similar import.

As shown in **FIG. 1****,** the device 10 may include a generally cylindrical crawler module 12 that is rotatably coupled at its front end to a welding module 14 as further described below. The device 10 may have a size and shape that are suitable for insertion longitudinally into a pipe section that is to be welded. For example, the device 10 may have a largest outer diameter in a range between 100-500 millimeters to accommodate most internal welding applications, though it is contemplated that the device 10 may be made smaller or larger (e.g., having a largest outer diameter up to or exceeding 1500 millimeters) to suit other welding applications without departing from the scope of the present disclosure.

The crawler module 12 may be provided with roller units 16a, 16b located adjacent the front and rear ends of the crawler module 12, respectively. The roller units 16a, 16b may be adapted to concentrically center the device 10 within a pipe section while allowing the device 10 to move longitudinally through the pipe as further described below. The roller units 16a, 16b may be provided with respective sets of positioning wheels 18a, 18b, 18c and 19a, 19b, 19c, wheel arms 20a, 20b, 20c and 21a, 21b, 21c, and drive mechanisms 22a, 22b, 22c and 23a, 23b, 23c. Wheels 18c, 19c, wheel arms 20c, 21c, and drive mechanisms 22c, 23c are not within view but are substantially identical to respective positioning wheels 18a, 18b, 19a, 19b, wheel arms 20a, 20b, 21a, 21b, and drive mechanisms 22a, 22b, 23a, 23b.

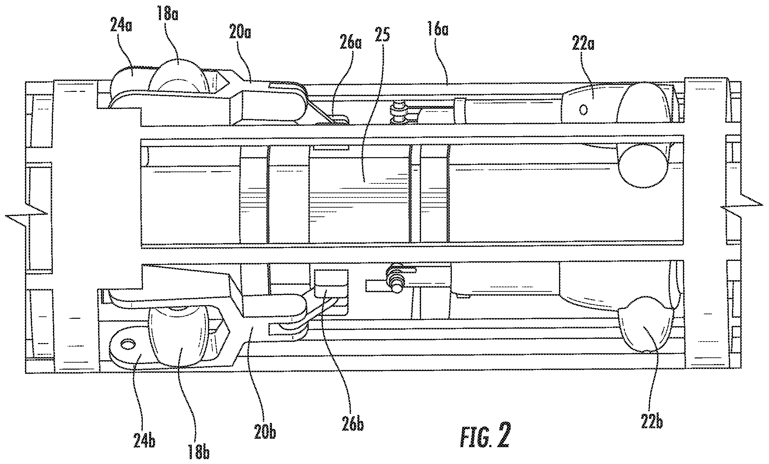

A detail view of the roller unit 16a is shown in **FIG. 2****.** The roller unit 16b is substantially identical to the roller unit 16a, and it will therefore be understood that the following description of the roller unit 16a and its components shall apply equally to the roller unit 16b.

The wheel arms 20a-c of the roller unit 16a may be evenly spaced about a circumference of the crawler module 12 (or about an imaginary circumference of the crawler module 12 if the crawler module 12 does not have a circular cross section). The wheel arms 20a-c may have respective first ends 24a, 24b, 24c that may be pivotably coupled to a static frame portion 25 of the roller unit 16a. The positioning wheels 18a-c may be rotatably mounted to respective second ends 26a, 26b, 26c of the wheel arms 20a-c. The wheel arms 20a-c may be coupled to respective drive mechanisms 22a-c which may be adapted to controllably pivot the wheel arms 20a-c about their respective points of attachment to the frame portion 25, thereby selectively moving the positioning wheels 18a-c radially outwardly or inwardly relative to the frame portion 25. The positioning wheels 18a-c may thereby be controllably moved radially into and out of engagement with the interior surface of a pipe section as will be further described below. The drive mechanisms 22a-c may be any appropriate type of drive mechanisms that are suitable for controllably pivoting the wheel arms 20a-c, including, but not limited to, electric actuators, pneumatic actuators, and hydraulic actuators.

While the exemplary roller units 16a, 16b are shown in **FIG. 1** as having three sets of positioning wheels 18a-c, 19a-c, wheel arms 20a-c, 21a-c, and drive mechanisms 22a-c, 23a-c, it is contemplated that the roller units 16a, 16b may be provided with additional sets of wheel arms, positioning wheels, and drive mechanisms. It is further contemplated that one or both of the roller units 16a, 16b may alternatively be provided with only a single drive mechanism that is adapted to simultaneously drive all of the respective wheel arms 20a-c, 21a-c. Moreover, while the crawler module 12 is shown in **FIG. 1** as having two roller units 16a, 16b located adjacent the front and rear ends of the crawler module 12, it is contemplated that crawler module 12 may alternatively be provided with a greater or fewer number of roller units located at a variety of different positions along the crawler module 12.

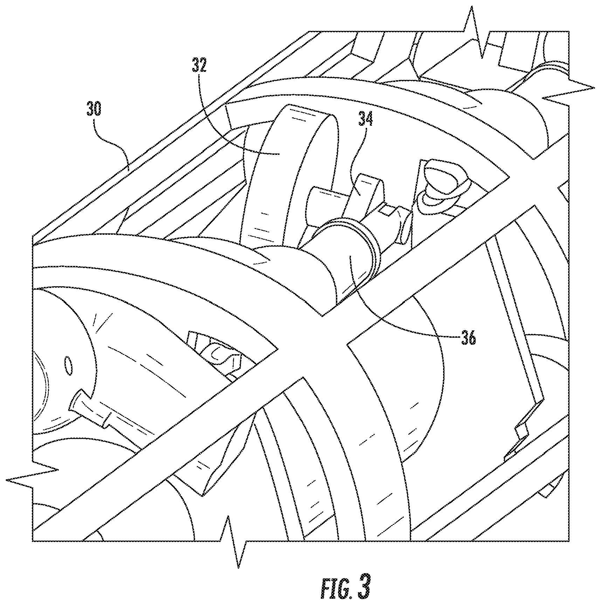

Referring again to **FIG. 1****,** the crawler module 12 may include a propulsion unit 30 located intermediate the roller units 16a, 16b. The propulsion unit 30 may be adapted to controllably drive the device 10 longitudinally through a pipe section. For example, referring to the detailed view of the propulsion unit 30 shown in **FIG. 3****,** the propulsion unit 30 may include a rotatably driven drive wheel 32 that may be mounted to a wheel arm 34. The wheel arm 34 may be coupled to a drive mechanism 36 for radially extending and retracting the wheel arm 34 relative to a static frame portion 37 of the propulsion unit in a manner similar to the wheel arms 20a-c described above. The drive wheel 32 may thereby be moved into and out of contact with the interior of a pipe section as will be further described below. The drive wheel 32 may be provided with a high-friction tread surface, such as may be formed of textured rubber or metal, for establishing a firm grip on the interior of a pipe section. The drive wheel 32 may further be provided with a brake mechanism (not shown) or a brake pad that may be controllably actuated for preventing unintended rotation of the drive wheel 32 to secure the longitudinal position of the device 10 within a pipe section.

The drive wheel 32 and the drive mechanism 36 of the propulsion unit 30 may be driven by electrical motors, compressed gas, etc., wherein the necessary electricity and/or gas may be supplied from sources (e.g., batteries, compressed gas cylinders, etc.) located onboard or external to the crawler module 12.

While the crawler module 12 is shown as having a single propulsion unit 30 with a single drive wheel 32 and wheel arm 34, it is contemplated that the crawler module 12 may be provided with additional propulsion units, and/or that the propulsion unit 30 may be provided with additional drive wheels and/or wheel arms. Additionally, it is contemplated that the drive wheel 32 and/or the wheel arm 34 may be replaced by, or supplemented with, any other type of structure or mechanism that can be adapted to controllably engage the interior of a pipe and forcibly move the device 10 longitudinally therethrough. Such structures and mechanisms may include, but are not limited to, rotatably driven tracks and belts. It is further contemplated that the propulsion unit 30 may be entirely omitted and that one of more of the positioning wheels 18a-c, 19a-c of the roller units 16a, 16b may be rotatably driven to move the device 10 longitudinally through a pipe section.

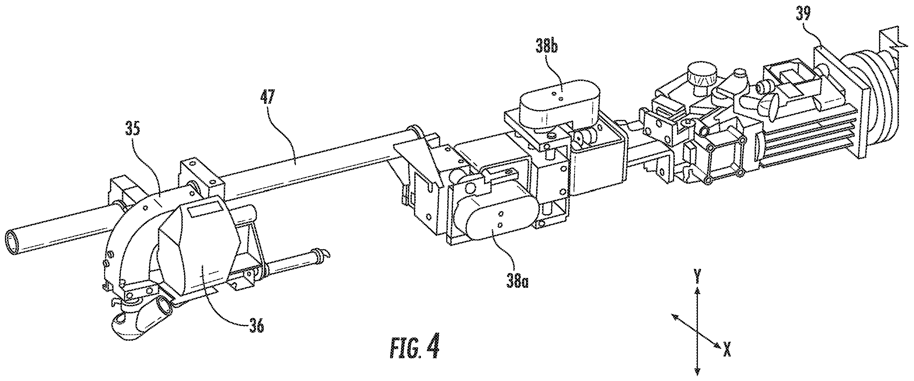

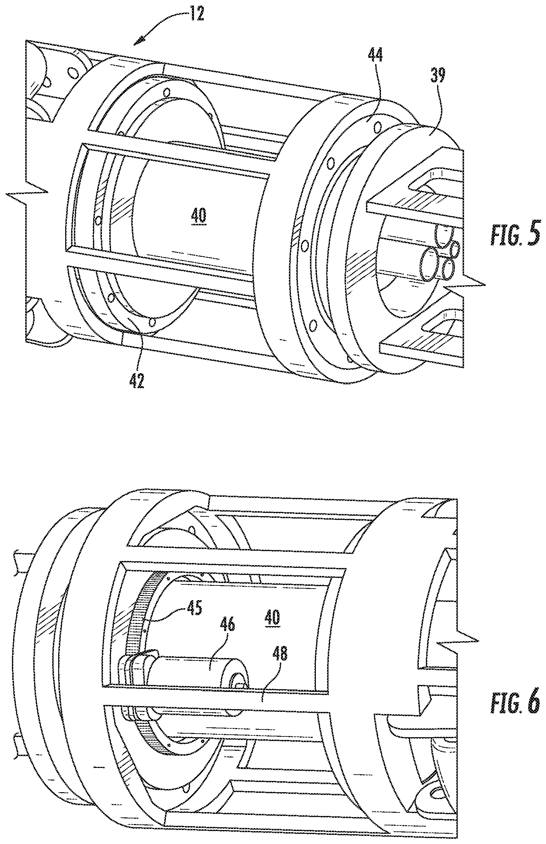

Referring to **FIGS. 1** and **4****,** the welding module 14 of the device 10 may further include a welding head 35, a joint detection unit 36, cross slides 38a, 38b, and a mounting portion 39. As shown in **FIG. 5****,** the mounting portion 39 of the welding module 14 may include a mounting shaft 40 that may be axially coupled to the crawler module 12 by an annular ring bearing 42 such as, but not limited to, roller bearing, rotation bearings, bushings, etc. that allows free rotation of the welding module 14 relative to the crawler module 12 about a common longitudinal axis. The mounting shaft 40 may extend through an annular bearing 43 that is radially interposed between the mounting shaft 40 and a static annular cuff 44 at the front end of the crawler module 12. The mounting shaft 40 may have an outer diameter that is only slightly smaller than an inner diameter of the annular bearing 43, and thus the mounting shaft 40 may extend through the annular bearing 43 in a radially close clearance relationship therewith. The annular bearing 43 may limit radial movement of the mounting shaft 40 and may thereby mitigate vibration of the welding module 14 during operation while allowing free, axial rotation of the mounting shaft 40. It is contemplated that the annular bearing 42 and the annular bearing 43 may be, or may include, any type of suitable mechanical structures that facilitate the above-described rotation and support of the mounting shaft 40. Such mechanical structures include, but are not limited to, roller bearings, ball bearings, bushings, and the like.

Referring to **FIG. 6****,** a ring gear 45 may be formed or mounted on the mounting shaft 40. A motor 46, such as an electric servo motor, may be mounted to a static frame portion 48 of the front end of the crawler module 12. The motor 46 may be coupled to the ring gear 45 and may be operated to controllably rotate the ring gear 45, mounting shaft 40, and thus the entire welding module 14, relative to the crawler module 12 about a common longitudinal axis. In an example, the motor 46 may be coupled to a mechanism or controller that may be configured to automatically operate the motor 46 to rotate the welding module 14 in an opposite direction and at a substantially identical rate of speed relative to a direction and speed of rotation of the crawler module 12. In one contemplated case, the mechanism or controller that dictates the operation of the motor 46 may be, or may include, a gyroscope to sense the angular position of the welding module 14. The motor 46 may thereby maintain an angular position of the welding module 14 regardless of the rotational speed and direction of the crawler module 12 as further described below.

Referring again to **FIG. 4****,** the welding head 35 may be positioned at a front end of the welding module 14. For example, the welding head 35 may be removably mounted on a longitudinally-extending arm 47 at the front of the welding module 14. In one example, the welding head 35 may be a submerged arc welding (SAW) head that is adapted to controllably deliver a consumable electrode and a quantity of flux material to a welding area in a manner that will be familiar to those of ordinary skill in the art. However, it is contemplated that other types of welding heads may be substituted for the SAW head. Such alternative welding heads may be adapted to perform various welding processes including, but not limited to, metal inert gas (MIG) welding, tungsten inert gas (TIG) welding, flux-cored arc welding (FCAW), plasma arc welding (PAW), etc. While the welding module 14 is shown and described herein as having a single welding head 35, it is contemplated that the welding module 35 may include a plurality of welding heads arranged in a variety of configurations for suiting various applications, including but not limited to, circumferential welding applications and/or longitudinal welding applications as further described below.

The welding head 35 and the arm 37 may be coupled to the mounting portion 39 of the welding module 14 by the cross slides 38a, 38b. In one aspect, the cross slides 38a, 38b may be substantially identical linear actuators that may be coupled to one another in an offset relationship. The cross slides 38a, 38b may be implemented using virtually any type of controllably-operated actuators, including, but not limited to, electric actuators, pneumatic actuators, and hydraulic actuators. The cross slides 38a, 38b may be operated to effectuate fine movement of the welding head 35 relative to the mounting portion 39 along transverse, respective axes of motion (e.g., the x and y axes shown in **FIG. 4**). The transverse and vertical positions of the welding head 35 relative to the longitudinal axis of the welding module 14 may thereby be controllably adjusted as further described below. Alternative examples of the welding module 14 are contemplated which include a cross slide that is substantially similar to the cross slides 38a, 38b, but that is oriented to facilitate fine longitudinal movement of the welding head 35 along the z axis shown in **FIG. 4****.**

The joint detection unit 36 may be mounted on or adjacent to the welding head 35 and may be configured to detect an interior joint or seem between longitudinally-abutting segments of pipe. The joint detection unit 36 may be implemented using any suitable mechanical, electrical, and/or optical sensor or detector. In one example, the joint detection unit 36 may be, or may include, a video camera which may communicate a recorded image to a remote operator interface as further described below. In other examples, the joint detection unit 36 may be, or may include, a laser or a photodetector which may be adapted to detect a joint. Still further, the joint detection unit may be, or may include, a mechanical seam tracking finger.

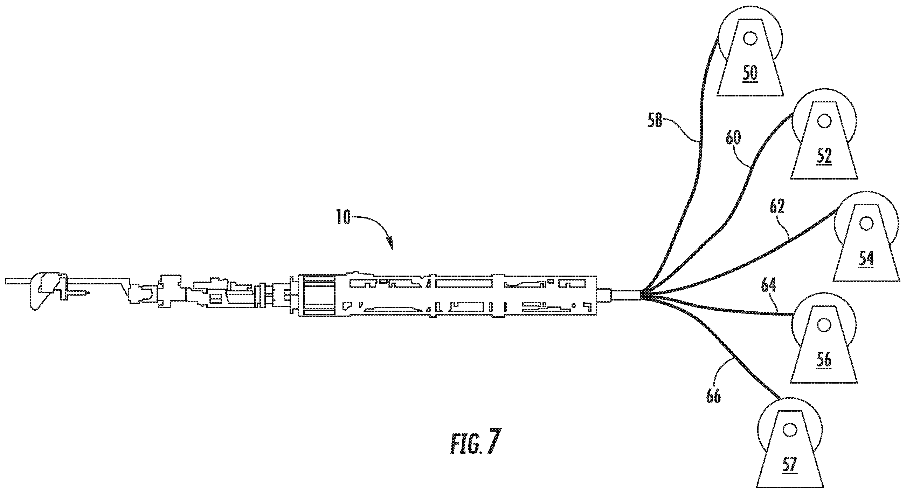

Referring to the side view of the device 10 shown in **FIG. 7****,** a plurality of reels 50, 52, 54, 56, 57 may be located at fixed positions adjacent to one end of the device 10 (e.g., on the floor of a manufacturing facility or on the deck of a vessel). These reels 50-57 may supply the device 10 with consumable materials, control cables, power cables, etc. as the device 10 travels through a pipe as further described below. For example, a first reel 50 may provide the welding head 35 of the device 10 with a consumable electrode 58. A second reel 52 may provide the welding head 35 with a flux supply line 60 through which flux may be delivered to the welding head 35 from a flux container (not shown). A third reel 54 may provide the device 10 with a power line 62 for delivering electrical power to various components of the device 10. A fourth reel 56 may provide the device 10 with a control cable 64 for facilitating control of various components of the device 10 from a controller and/or operator interface (not shown). A fifth reel 57 may provide the welding head 35 with a gas line 66 that may supply gas to a pressurized gas cylinder (not shown) on the device 10 for providing compressed gas to the propulsion unit 30, the cross slides 38a, 38b, and/or other forcibly driven components of the device 10. It is contemplated various additional reels may be similarly implemented for providing the device 10 with various other cables, lines, conductors, wires, and hoses.

Although illustrated as reels, it is contemplated that one or more of the electrode, flux, and compressed gas provided by the above-described reels 50, 52, and 57 may instead be carried onboard the device 10, and that the control features facilitated by the control cable 64 provided by the reel 56 may instead be implemented by onboard components of the device. For example, it is contemplated that the device 10 may carry an onboard supply of electrode and/or flux, thereby eliminating the need for the reels 50 and/or 52.

In some cases, the device 10 may include a conduit that extends longitudinally through the crawler module 12 for routing one or more of the above-described cables, lines, conductors, wires, and/or hoses. Such a conduit may house the cables, lines, conductors, wires, and hoses and may mitigate tangling or interference thereof with other components of the device 10. In some cases, the conduit may be coupled to the crawler module 12 with bearings so that conduit may remain substantially static while the crawler module 12 rotates during operation of the device 10, thereby mitigating twisting of the cables, lines, conductors, wires, and hoses.

The device 10 may also be provided with a wireless communication module for wirelessly receiving and transmitting command and control signals, thereby eliminating the need for the cable 64 and the reel 56. Exemplary command and control signals include on/off signals for powering the device 10 on or off, jog signals for activating the drive wheel 32 to move the device 10 forward or backward through a pipe, various welding control signals for manipulating the position and operation of the welding head 35, etc. Still further, it is contemplated that the device 10 may be provided with an onboard supply of compressed gas, thereby eliminating the need for the reel 57.

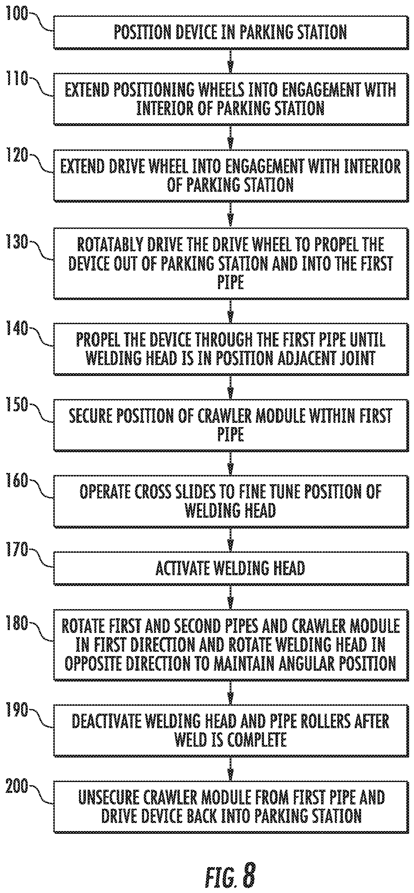

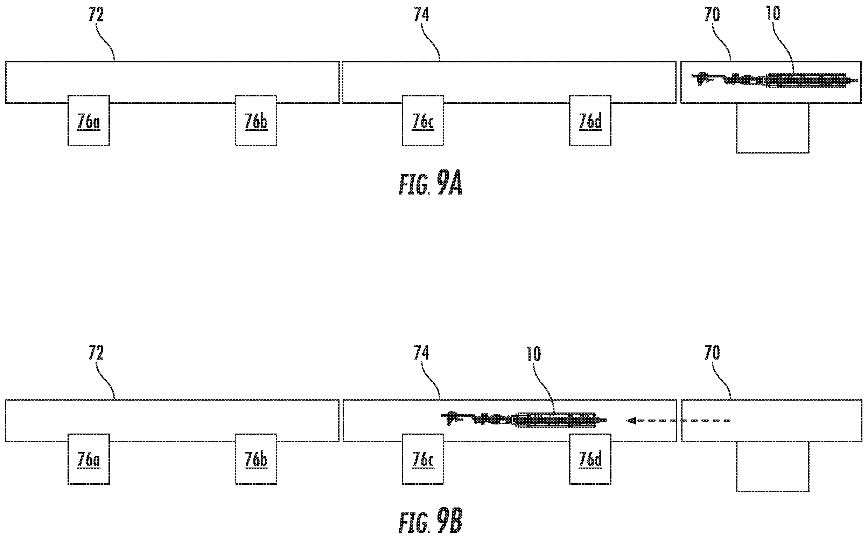

Referring to **FIG. 8****,** a flow diagram illustrating a general exemplary method for operating the device 10 is shown. The method will be described in conjunction with the views of the device 10 shown in **FIGS. 1-7** and the series of operational steps depicted in **FIGS. 9a-9d****.** Unless otherwise specified, the described method may be effectuated manually at the direction of one or more device operators, and/or automatically at the direction of a properly configured controller, such as through the execution of various software instructions thereby.

At a first step 100, the device 10 may be positioned in a parking station 70 as shown in **FIG. 9a** with the welding head 35 of the welding module 14 in a 6 o'clock orientation (i.e., directed vertically-downwardly). The parking station 70 may be a section of pipe having a diameter that is substantially equal to the diameters of first and second pipe sections 72, 74 that are to be welded together. The first and second pipe sections 72, 74 may be disposed on pipe rollers 76a, 76b, 76c, and 76d in axial abutment and in concentric alignment with one another and with the parking station 70.

At step 110, the drive mechanisms 22a-c, 23a-c of the roller units 16a, 16b may be operated to radially extend the wheel arms 20a-c, 21a-c as described above, thereby moving the positioning wheels 18a-c, 19a-c into engagement with the interior of the parking station 70 and concentrically centering the device 10 within the parking station 70. At step 120 of the method, the drive mechanism 36 of the propulsion unit 30 may be operated to radially extend the wheel arm 34 as described above, thereby moving the drive wheel 32 into engagement with the interior of the parking station 70.

At step 130, the drive wheel 32 of the propulsion unit 30 may be rotatably driven to propel the device 10 forward through the parking station 70 and into the first pipe 72 as shown in **FIG. 9b****.** The roller units 16a, 16b of the device 10 may allow the device 10 to move smoothly through and between the parking station 70 and the first pipe 72 while maintaining concentric alignment of the device 10 therein. In another example of the method, the parking station 70 may be omitted and the device 10 may be placed directly into the first pipe 10, such as with a crane or a lift. In such a case, steps 110 and 120 described above would be performed after the device 10 was placed in the first pipe.

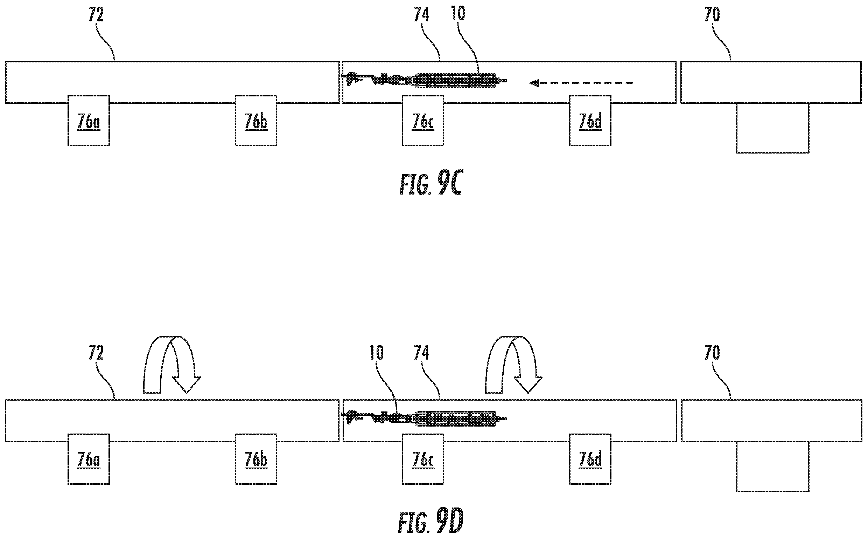

At step 140, the propulsion unit 30 may continue to drive the device 10 forward through the first pipe 72 until the welding head 35 of the welding module 14 is moved into longitudinal alignment with, or nearly into longitudinal alignment with, a joint 78 between the first and second pipes 72, 74 as shown in **FIG. 9c****.** The position of the welding head 35 relative to the joint 78 may be manually or automatically determined using the joint detection unit 36 described above. In another example of the method, the second pipe 74 may be placed on the pipe rollers 76a, 76b in axial abutment and concentric alignment with the first pipe 72 after the welding head 35 has already been moved into a desired welding position at the front edge of the first pipe 72, thereby obviating the need for the joint detection unit 36.

If a desired welding position of the welding head 35 was not or could not been achieved through longitudinal movement of the device 10 by the propulsion unit 30, the cross slides 38a, 38b may, in step 150 of the exemplary method, be operated to effectuate fine lateral and/or vertical movement of the welding head 35 until the desired welding position is achieved. For example, the cross slide 38b may be operated to lower the welding head 35 to a position vertically nearer the joint 78 if necessary. Additionally, or alternatively, the cross slide 38a may be operated to adjust the lateral position of the welding head 35 if necessary.

At step 160, with the welding head 35 still in a 6 o'clock orientation, the drive mechanisms 22a-c, 23a-c of the roller units 16a, 16b may be operated to drive the wheel arms 20a-c, 21a-c radially outwardly to increase the force of the wheels positioning 18a-c, 19a-c against the interior of the first pipe 72, thereby increasing the frictional engagement between the positioning wheels 18a-c, 19a-c and the interior of the first pipe 72 and firmly securing the crawler module 12 against longitudinal or rotational movement relative to the first pipe 72. The drive wheel 32 may additionally or alternatively be forced against the interior of the first pipe 72 in a similar manner to secure the position of the crawler module 12 in the pipe 72. Still further, the brake mechanism of the drive wheel 32 (if the drive wheel 32 is provided with a brake mechanism) may also be employed to prevent rotation of the drive wheel 32 to secure the longitudinal position of the crawler module 12 within the first pipe 72.

At step 170, the welding head 35 may be activated to establish an electrical arc between an electrode and the joint 78 and to deposit a desired quantity of flux on the joint 78 to cover the electrical arc. The welding head 35 may thereby begin to deposit weld metal in the joint 78.

At step 180 of the exemplary method, the pipe rollers 76a-d may be activated to rotate the first and second pipes 72, 74 in the same direction and at a substantially identical speed as shown in **FIG. 9d****.** With the position of the crawler module 12 firmly secured relative to the first pipe 72 as described in step 160 above, the crawler module 12 may rotate with the first pipe 72 as the first pipe 72 is rotated by the pipe rollers 76c, 76d. At the same time, the motor 46 coupled to the ring gear 45 of the mounting shaft 40 of the welding module 14 (shown in **FIG. 6**) may be activated to automatically rotate the welding module 14 at substantially the same speed but in an opposite direction relative to the crawler module 12 (as described above), thereby keeping the welding head 35 in the 6 o'clock orientation above the joint 78. Thus, as the first and second pipes 72, 74 are rotated, the annular joint 78 rotates and passes below the stationary, active welding head 35 which deposits weld metal in the joint 78 that axially joins the first and second pipes 72, 74.

Once the welding head 35 has completed the weld between the first and second pipes 72, 74 (such as may be automatically or manually determined using the joint detection unit 36, for example), the welding head 35 and the pipe rollers 76a-d may, at step 190 of the exemplary method, be deactivated. At step 200 of the method, the crawler module 12 may be unlocked from the first pipe 72 and the device 10 may be driven back into the parking station 70 by reversing the operations performed in steps 110-140 described above.

Although the method has been described in relation to the making of a circumferential weld between a pair of opposing pipe sections, it is contemplated that the device 10 may also be used to create a longitudinal weld seam within a pipe. For example, the welding head 35 may be activated while the device 10 is driven longitudinally through a pipe as described in steps 110-140 above, with the precise position of the welding head 35 being adjusted as described in step 150 above so as to maintain the welding head 35 in the 6 o'clock position above the joint 78. It is further contemplated that the device 10 may be configured to exclusively perform longitudinal welding. For example, the welding module 14 may be statically (i.e., non-rotatably) coupled to the crawler module 12 in a manner that does not allow relative axial rotation there between. Such a case may be lighter, simpler (i.e., requiring fewer and/or less complex parts), and less expensive to manufacture relative to the device 10 described above, making it more appropriate for applications in which circumferential weld seems are unnecessary.

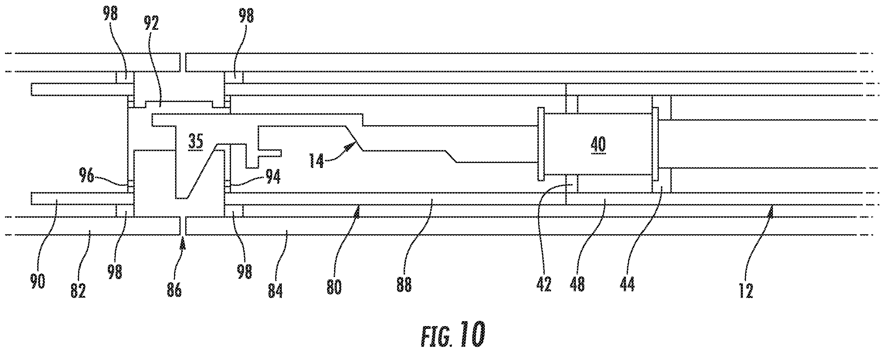

Referring to **FIG. 10****,** a cross sectional side view of an alternative device 10 is shown in which an optional pipe clamping module 80 is attached to the crawler module 12. The pipe clamping module 80 may be implemented for providing pipe sections, such as pipe sections 82, 84 shown in **FIG. 10****,** with radial support adjacent a longitudinal juncture 86 of the pipe sections 82, 84 when the pipe sections 82, 84 are welded together at the juncture 86.

The pipe clamping module 80 may include a generally cylindrical proximal support cage 88 that may be removably or permanently attached to the static frame portion 48 of the crawler module 12, such as with mechanical fasteners or welds. Alternatively, the pipe clamping module 80 may be integral with the static frame portion 48 of the crawler module 12. The proximal support cage 88 may extend forward from the static frame portion 48 over a majority of the welding module 14 to a forward-most terminus that is longitudinally short of the welding head 35.

The pipe clamping module 80 may further include a generally cylindrical distal support cage 90 that may be coaxial with, and disposed on a longitudinally-opposite side of the welding head 35 from, the proximal support cage 88. The distal support cage 90 may be connected to the proximal support cage 88 by a bridge member 92. The bridge member 92 may longitudinally span, and may be disposed laterally adjacent, the welding head 35. It is contemplated that in some cases the bridge member 92 may be attached to the welding head 35. The bridge member 92 may be attached to the proximal support cage 88 and the distal support cage 90 by respective annular ring bearing 94, 96 such as, but not limited to, roller bearings, rotation bearings, bushings, etc. that allow free rotation of the bridge member 92 relative to the proximal support cage 88 and the distal support cage 90 about a common longitudinal axis as further described below.

The pipe clamping module 80 may further include clamping mechanisms 98 that may be integral with the proximal support cage 88 and the distal support cage 90. The clamping mechanisms 98 may include a plurality of circumferentially-spaced pads, tracks, feet or the like that may be radially extended and retracted relative to the proximal support cage 88 and the distal support cage 90, such as via motorized actuation, to selectively engage and disengage the interior surfaces of the pipe sections 82, 84. For example, the clamping mechanisms 98 may be moved between a retracted position, wherein the clamping mechanisms 98 are positioned radially near or within the proximal support cage 88 and the distal support cage 90, and a deployed position (shown in **FIG. 10**), wherein the clamping mechanisms 98 are radially extended from the proximal support cage 88 and the distal support cage 90 to firmly engage and radially support the pipe sections 82, 84 at positions adjacent the juncture 86. In some cases, the pipe clamping module 80 may additionally or alternatively include clamping mechanisms that may be longitudinally extended and retracted, such as for engaging longitudinal ends of pipe sections.

When the device 10 is moved into position to weld the pipe sections 82, 84 together, with the welding head 35 positioned above the juncture 86 as shown in **FIG. 10****,** the clamping mechanisms 98 may be moved to the deployed position to engage and internally clamp the pipe sections 82, 84. When the pipe sections 82, 84 are rotated about their axes during a welding operation (as described above), the proximal support cage 88 and the distal support cage 90 may rotate with the pipe sections 82, 84 by virtue of frictional engagement between the clamping mechanisms 98 and the pipe sections 82, 84. However, since the bridge member 92 is able to rotate freely about its axis relative to the proximal support cage 88 and the distal support cage 90, the bridge member 92 may remain substantially stationary as the pipe sections 82, 84 and the proximal support cage 88 and the distal support cage 90 are rotated. The pipe clamping module 80 may thereby provide the pipe sections 82, 84 with radial support on either longitudinal side of the juncture 86 during a welding operation without the bridge member 92 interfering with the weld head 35.

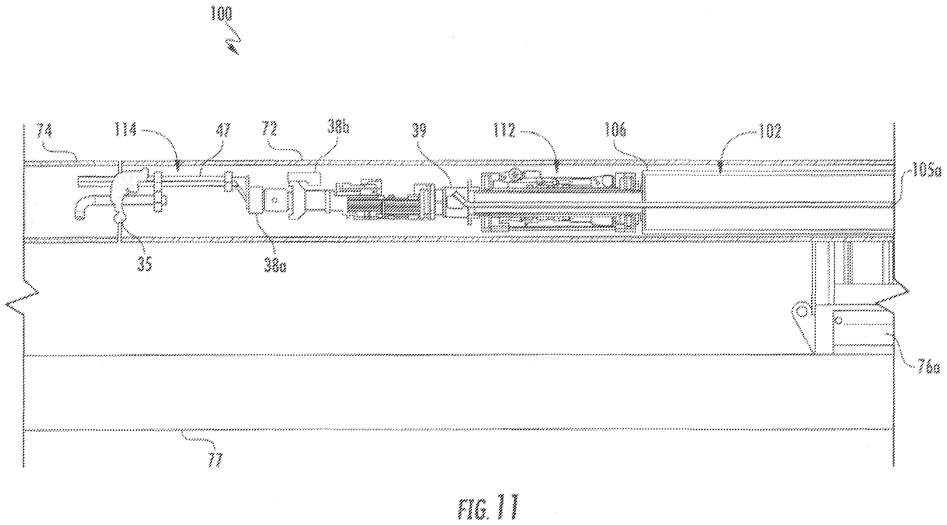

Referring to **FIGs. 11-17**, an embodiment of the device 100 according to the present invention is shown. The device 100 is substantially identical to device 10 previously described in relation to **FIGS. 1-10** except as provided herein.

As shown in **FIG. 11****,** the device 100 includes, according to the present invention, a boom 102, a crawler unit 112, and a welding module 114. The welding module 114 may be substantially similar to the welding module 14 described above in connection with **FIG. 4****,** and thus for the sake of brevity, the description of the welding module is not repeated here.

Referring to **FIGs. 11-13****,** **16A-16F** **and** **17**, the boom 102 may be a cylindrical hollow tube having a first end 104 and a second end 106. It should be noted, that while the boom 102 is shown and described as having a cylindrical outer shape, it is contemplated that the boom 102 can have any shape so long as it fits within the first and second pipe sections 72, 74. The boom 102 may be a single, unitary pipe. Alternatively, the boom 102 may be formed by multiple segments of pipe or may be a telescopic pipe such as, for example, as disclosed in U.S. Patent No. 8,231,045. The boom 102 may be moved back and forth using, for example, an actuator such as, a cross slide (as previously described) or as described in the '045 patent. The boom 102 has a size and shape that is suitable for insertion into the first and second pipe sections 72, 74 that are to be welded.

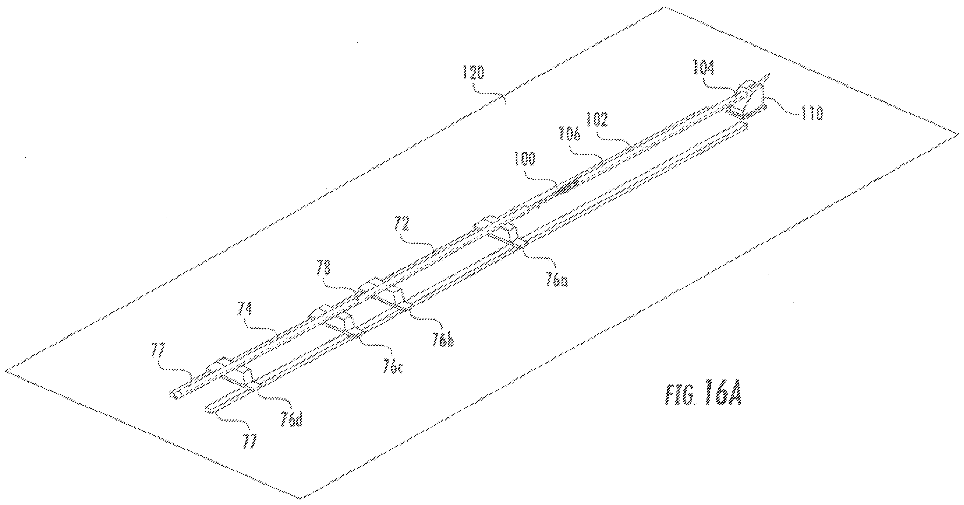

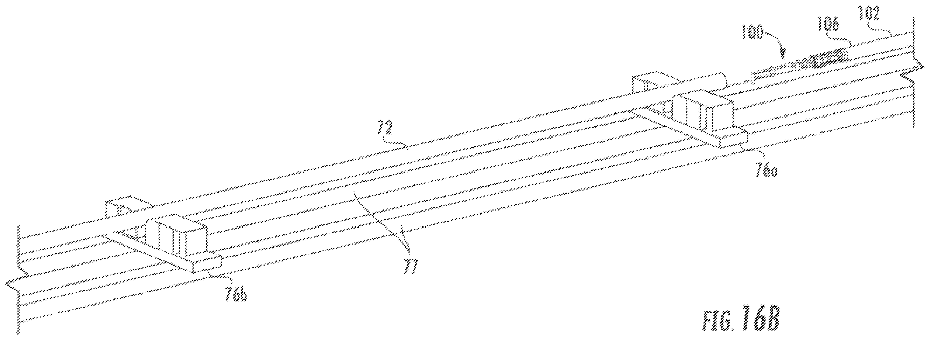

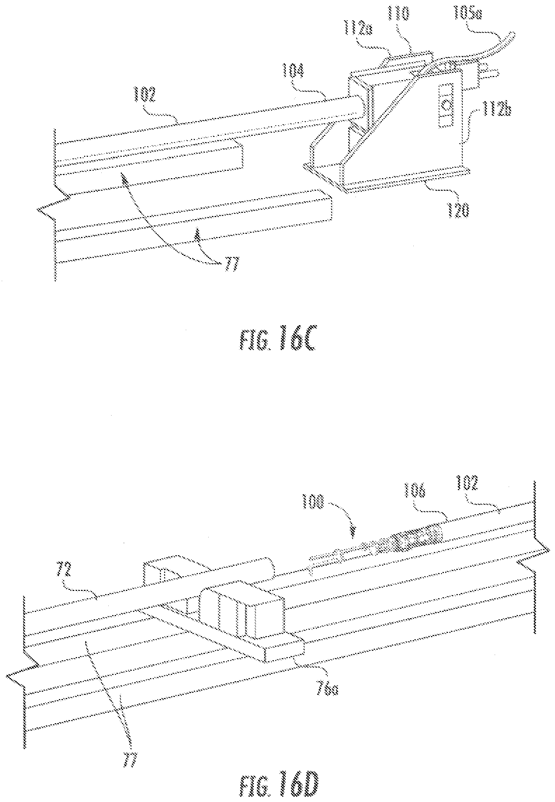

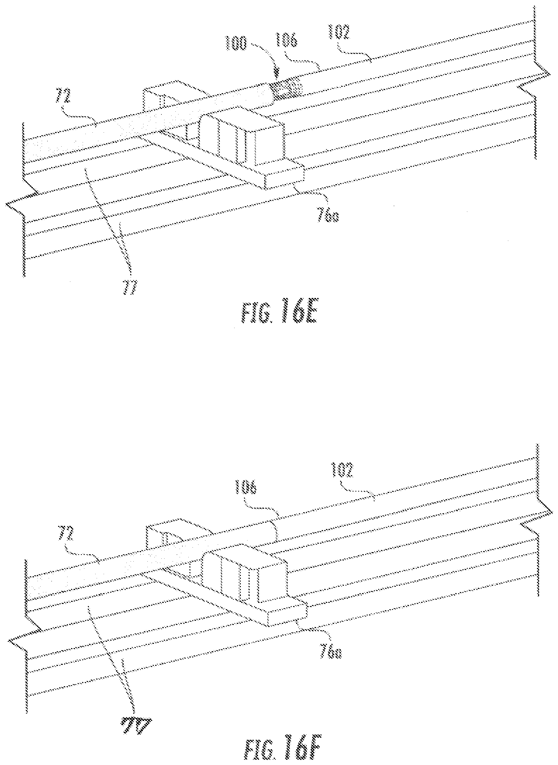

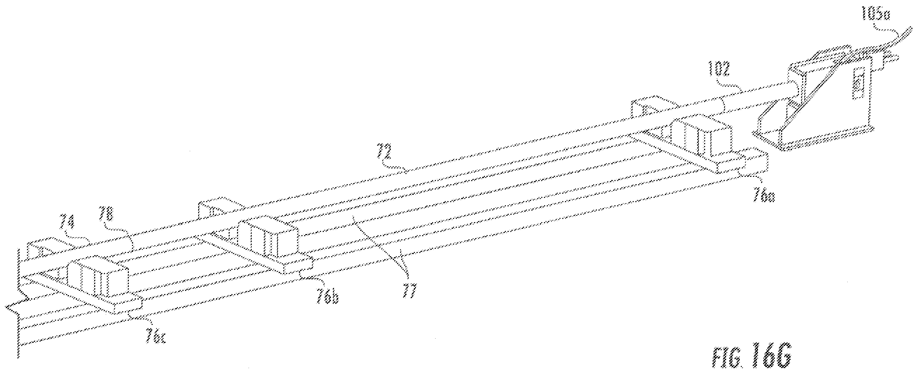

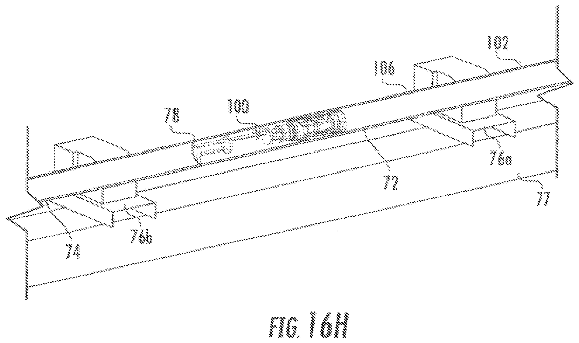

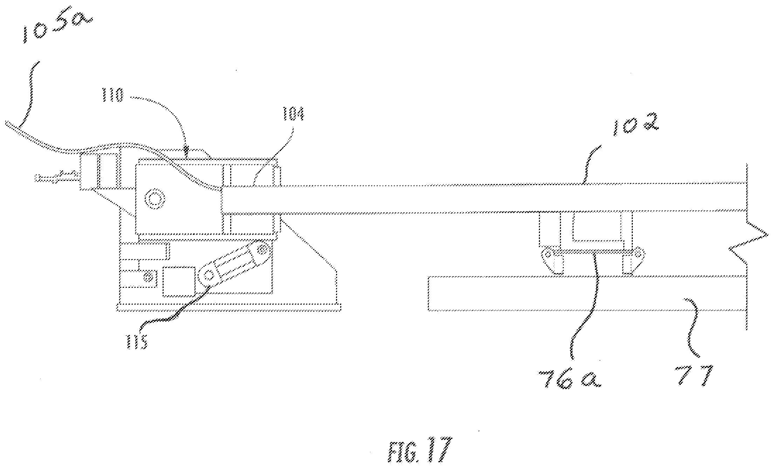

The first end 104 of the boom 102 is coupled, according to the present invention, to a support 110 (**FIGs. 16A****,** **16C****,** **16G** **and** **17**)**.** The support 110 may be fixedly coupled to the floor 120 of the operating environment, such as the floor of a manufacturing facility, vessel, etc. In use, the support 110 is fixably coupled to the boom 102 for supporting the boom 102 in place. As shown, the support 110 may be in the form of a U-shaped bracket 112a, 112b for securing and supporting the boom 102. However, one of ordinary skill in the art will appreciate that the support 110 may take on any form now known or hereafter developed.

As will be described in greater detail below and according to the present invention, the support 110 includes an angular adjustment mechanism 115 for angling or tilting the entire boom 102, and hence the device 100 attached thereto. In this manner, the angular adjustment mechanism 115 angles or tilts the device 100 to offset the elastic deformation of the boom 102. That is, as previously mentioned, the device 100 may be very heavy (e.g., over 5000 kg), which may cause the boom 102 to bend or elastically deform under its own weight and the weight of any equipment attached to it, for example, welding head module 14, etc. By providing an angular adjustment mechanism 115, the user is able to offset some or all of the bend or elastic deformation. The angular adjustment mechanism 115 may provide for up to, approximately 3 degrees of angular adjustment, although it is contemplated that the angular adjustment mechanism 115 may permit more or less adjustment. The angular adjustment mechanism 115 may be any know or hereafter developed mechanism for angularly adjusting the position of the boom 102 and hence the device 100 with respect to the pipe sections 72, 74. For example, the angular adjustment mechanism 115 may be in the form of an actuator (as illustratively shown), an actuator coupled to the boom via a cam gear, etc.

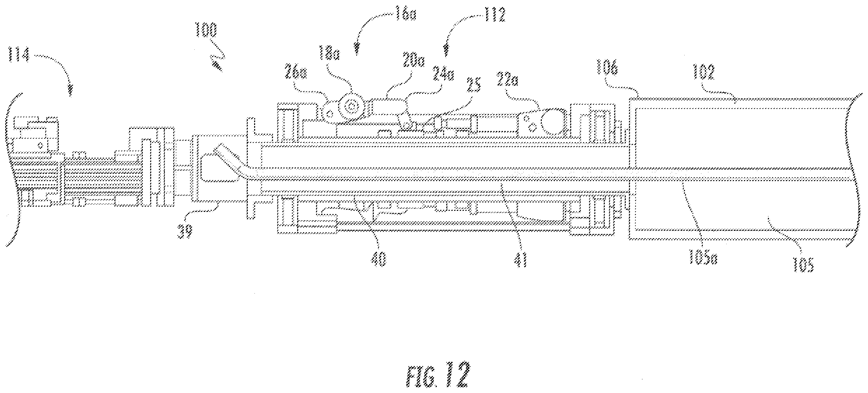

Referring to **FIG. 12****,** the boom 102 may include an internal borehole 105 that extends longitudinally therethrough. As will be described in greater detail below, the mounting shaft 40 may also include an internal borehole 41. The internal boreholes 105, 41 formed in the boom 102 and the shaft 40, respectively, enable routing one or more of the above-described cables, lines, conductors, wires, and/or hoses (illustratively shown as 105a) for serving the welding module 114. In use, the cables, lines, conductors, wires, and/or hoses 105a may extend from the first end 104 of the boom 102 to the second end 106 of the boom, through the mounting shaft 40 attached to the second end 106 of the boom 102, and then to the welding head 35.

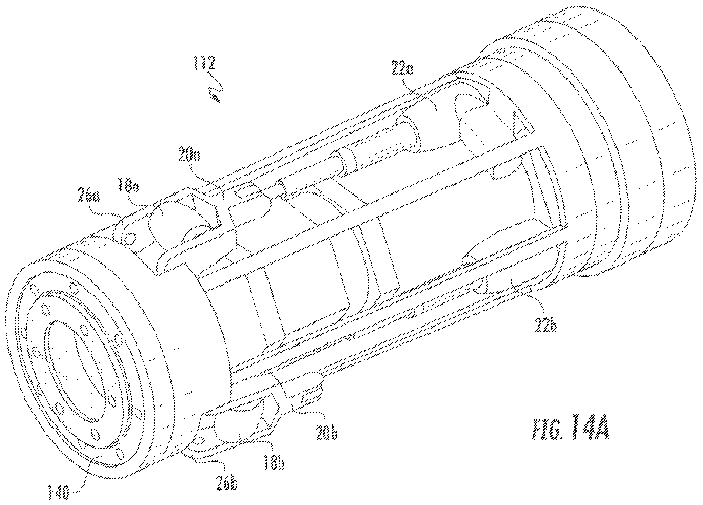

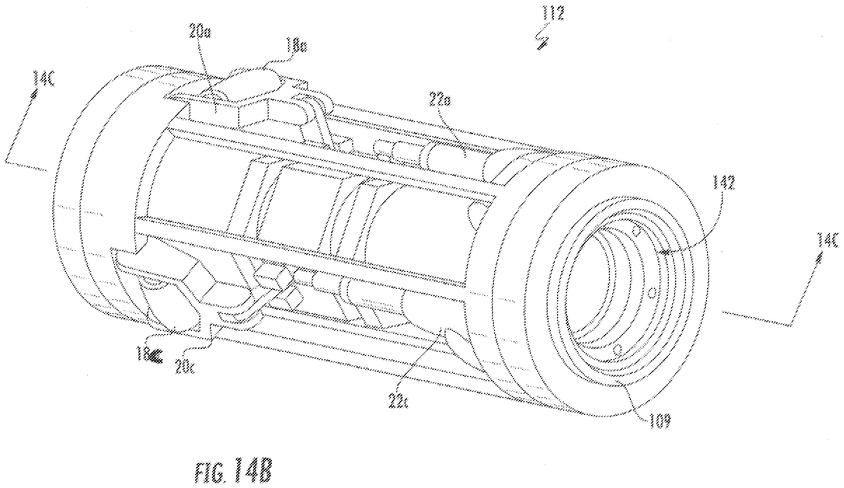

Referring to **FIGs. 12** **and** **14A****-14B,** the crawler module 112 is shown. The crawler module 112 may be substantially similar to the crawler module 12 previously described in relation to **FIGS. 1-10****,** except as provided herein. For example, the crawler module 112 may be provided with one or more roller units 16a adapted to concentrically center the device 100 within a pipe section while allowing the device 100 to move longitudinally through the pipe. The roller unit 16a may be provided with respective sets of wheels 18a, 18b, 18c, wheel arms 20a, 20b, 20c, and drive mechanisms 22a, 22b, 22c. Wheels 18c, wheel arms 20c, and drive mechanisms 22c, are not within view but are substantially identical to respective wheels 18a, 18b, wheel arms 20a, 20b, and drive mechanisms 22a, 22b. The wheel arms 20a-c may be evenly spaced about a circumference of the crawler module 112 (or about an imaginary circumference of the crawler module 112 if the crawler module 112 does not have a circular cross section). The wheel arms 20a-c may have respective first ends 24a, 24b, 24c that may be pivotably coupled to a static frame portion 25 of the roller unit 16a. The wheels 18a-c may be rotatably mounted to respective second ends 26a, 26b, 26c of the wheel arms 20a-c. The wheel arms 20a-c may be coupled to respective drive mechanisms 22a-c which may be adapted to controllably pivot the wheel arms 20a-c about their respective points of attachment to the frame portion 25, thereby selectively moving the wheels 18a-c radially outwardly or inwardly relative to the frame portion 25. The wheels 18a-c may thereby be controllably moved radially into and out of engagement with the interior surface of a pipe section.

As previously noted, while the exemplary roller unit 16a is shown as having three sets of wheels 18a-c, wheel arms 20a-c, and drive mechanisms 22a-c, it is contemplated that the roller unit 16a may be provided with more or less wheel arms, wheels, and drive mechanisms without departing from the present disclosure. It is further contemplated that the roller unit 16a may alternatively be provided with only a single drive mechanism that is adapted to simultaneously drive all of the respective wheel arms 20a-c. Moreover, while the crawler module 112 is shown as having a single roller unit 16a, it is contemplated that the crawler module 112 may alternatively be provided with a greater number of roller units located at a variety of different positions along the crawler module 112.

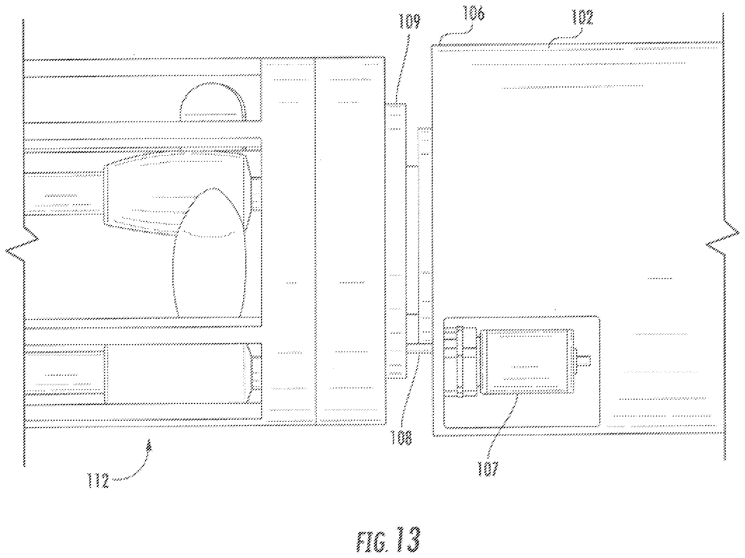

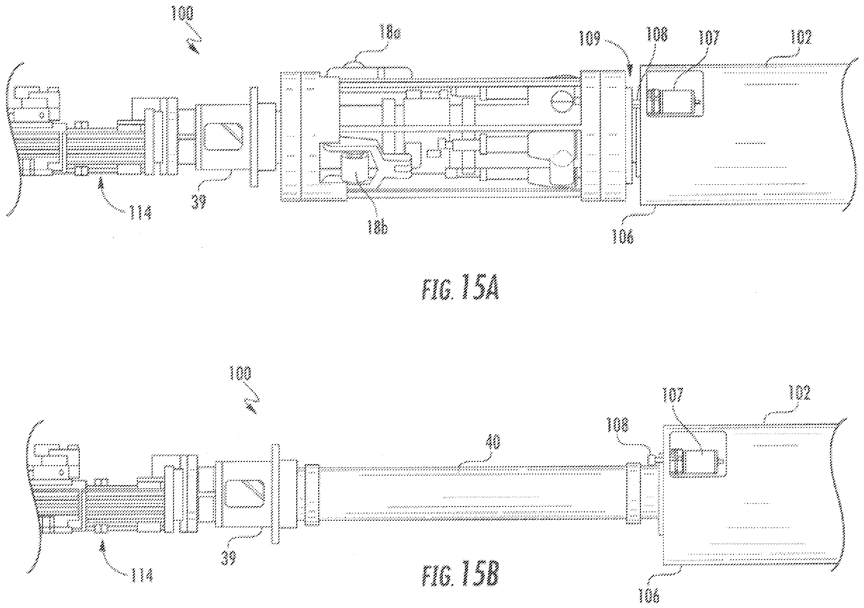

Referring to **FIGs. 13****,** **15A and 15B****,** the second end 106 of the boom 102 may include a drive motor 107 operatively coupled to a pinion 108 for engaging a rack 109 coupled to the crawler unit 112. In this manner, the crawler unit 112 may be actively, rotatably driven by the motor 107, pinion 108 and rack 109 in synch with the rotation of the pipe sections 72, 74 by the roller beds 76a-d. For example, it may be desirable to utilize the motor 107, pinion 108 and rack 109 to rotate the crawler unit 112 when or if the wheels 18a-c cannot generate enough frictional engagement against the interior surface of the first pipe 72, or, as will be described in greater detail below, when performing a longitudinal weld. A clutch mechanism (not shown) may also be included so that the motor 107, pinion 108 and rack 109 may be disengaged when passive rotation of the crawler unit 112 is sufficient and/or desirable.

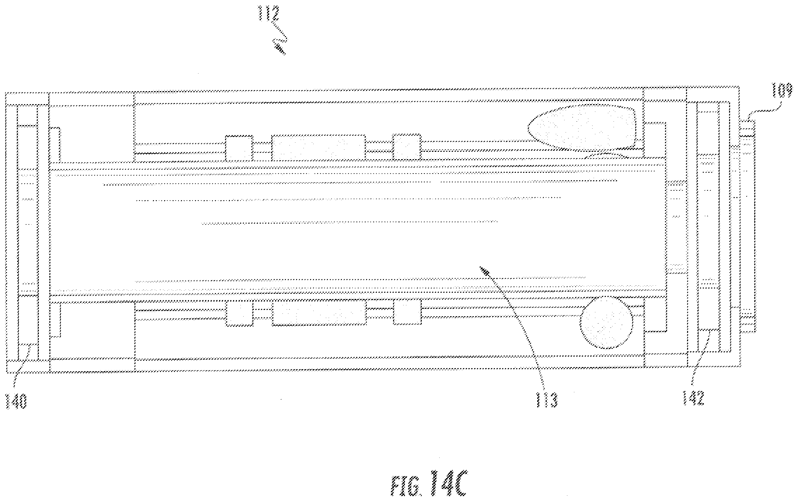

Assembling of the device 100 will now be described. Referring to **FIGs. 14A-14C****,** the crawler module 112 may further include first and second ring bearings 140, 142 on opposite longitudinal ends thereof. Furthermore, referring to **FIGs. 14C****, and** **15A****-15B,** as previously described, the mounting portion 39 of the welding module 114 includes, according to the present invention, a mounting shaft 40 that may pass through a bore 113 formed in the crawler unit 112 and into mechanical engagement with the second end 106 of the boom 102. The first and second ring bearings 140, 142 may couple the crawler unit 112 to the mounting shaft 40 so that the crawler unit 112 may rotate with respect to the mounting shaft 40 and hence with respect to the boom 102 and welding module 114 coupled thereto. Thus, in use, rotation of the pipe via the pipe rollers 76a-d causes the crawler unit 112 to rotate with respect to the boom 102, mounting shaft 40 and welding module 114. As previously mentioned, the mounting shaft 40 may include a bore 41 (**FIG. 12**) so that the one or more of the cables, lines, conductors, wires, and/or hoses 105a may extend through the mounting shaft 40 and then to the welding head 35. It is contemplated that the ring bearings 140, 142 may be any type of suitable mechanical structures that facilitate the above-described rotation and support of the mounting shaft 40. Such mechanical structures include, but are not limited to, roller bearings, spherical roller bearings (able to handle angular deviation), rotation bearings, ball bearings, bushings, and the like.

Referring to **FIGs. 16A-16G**, in use, the first end 104 of the boom 102 is secured to the support 110, which is fastened to the floor 120 of the operating environment so that the boom 102 may be static (although the boom 102 and hence the device 100, which is secured to the second end 106 of the device 100 is adjusted slightly via the angular adjustment mechanism 115). The pipe sections 72, 74 are placed onto the pipe rollers 76a-d, which reside on rails 77. The pipe rollers 76a-d may be longitudinally translatable along the rails 77 so that the device 100, which is coupled to the second end 106 of the boom 102, may be properly positioned within the pipe sections 72, 74. Once the device 100 is substantially positioned in its proper position, fine adjustment may be made via one or more cross slides that may be incorporated into the welding module 114. The cross-slides may be adapted and configured to provide adjustment in any direction, for example, longitudinally (e.g., along the boom direction), vertically, lateral, etc. The cross slides may enable fine tuning by permitting slight movement of the weld head 114. While it is contemplated that fine tuning may be performed by one or more cross-slides as previously mentioned, it is also contemplated that adjustments may also be performed by moving the entire boom 102, for example, by incorporating a telescopic boom, etc. In this scenario, the entire boom may be moved longitudinally, vertically, and/or laterally by moving the entire boom or by telescopically moving one or more of the boom segments with respect to each other. Thereafter, longitudinal, vertical or lateral adjustment may also be performed by cross-slides.

The device 100 may be positioned to weld either two pipe sections 72, 74 together circumferentially (as shown in **FIGs. 16A-16G**) or weld one or more pipe sections longitudinally (not shown). When circumferential welding two pipe sections 72, 74 together, the first end 104 of the boom 102 may be secured to the support 110 while the device 100 may be coupled to the second end 106 of the boom 102. Next, the pipe sections 72, 74 may be placed onto the pipe rollers 76a-d, which are movably located on the rails 77. The pipe rollers 76a-d may then be moved longitudinally until the device 100 is properly positioned within the pipe sections 72, 74. Once the desired position has been achieved, the wheels 18a-c may be moved radially into engagement with the interior surface of the pipe section 72. Next, the pipe sections 72, 74 may be rotated in unison via the roller beds 76a-d, the crawler unit 112 may rotate in unison with the rotation of the pipe sections 72, 74 passively due to the wheels 18a-c radially engaging the interior surface of the pipe section 72 and/or in combination with the motor 107, pinion 108 and rack 109, if present, after the wheels 18a-c radially engage the interior surface of the pipe section 72, the crawler unit 112 may be rotatably driven in synch by the motor 107, pinion 108 and rack 109. As such and as previously described above, circular pipe-to-pipe welds are made by positioning the torch of the welding head 35 over the joint 78 between the pipes 72, 74, and rotating the pipe sections 72, 74 as they are being welded together. It should be noted that while the welding process is discussed in terms of welding the pipe section 72, 74 together, it is contemplated that the pipe sections 72, 74 may be initially tack welded together prior to the pipe welding device 100 performing the final weld. The pipe sections 72, 74 may be rotated 360-degrees so that pipe sections 72, 74 may be welded together. While the pipe sections 72, 74 have been described as rotating 360 degrees, it is contemplated that multiple passes may be required and thus the pipe sections 72, 74 may be rotated more than 360 degrees including, for example, 720 degrees, 1080 degrees, etc. As the pipe sections 72, 74 rotate, the torch remains essentially at the 6-o'clock position so that the weld is always made at that position. Thus, in operation the boom 102, the mounting shaft 40 and the welding module 114 remain rotationally fixed, while the pipe sections 72, 74 and the crawler module 112 rotate.

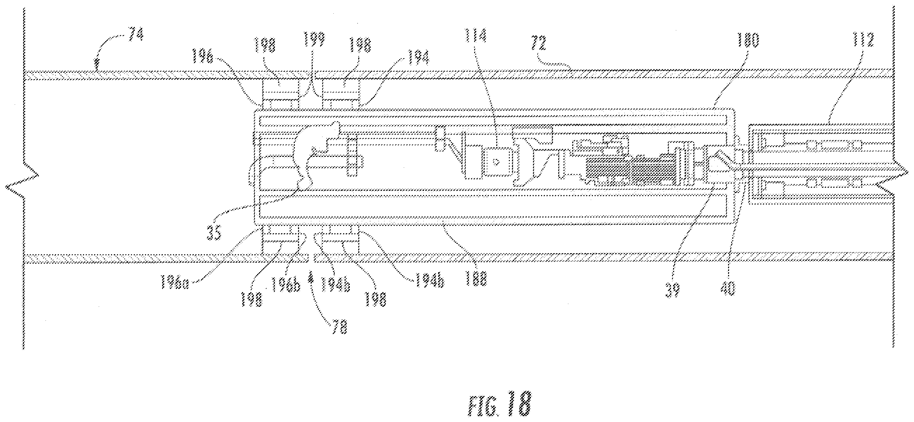

As previously mentioned, the device 100 may further include a pipe clamping module. The device 100 may be used in combination with any clamping module now known or hereafter developed for clamping the first and second pipe sections 72, 74 together. For example, the device 100 may be used with the pipe clamping module 80 illustrated and described above in connection with **FIG. 10****.** Referring to **FIG. 18****,** a side view of an alternative embodiment of an optional pipe clamping module 180 is illustrated. In this embodiment, the pipe clamping module 180 may be attached to the mounting portion 39, the mounting shaft 40 or any other location along the welding module 114 so that the pipe clamping module 180 may be static and non-rotatably coupled to the welding module 114, the mounting shaft 40 and the boom 102. The pipe clamping module 180 may be implemented for providing pipe sections 72, 74 with radial support, and thus alignment, adjacent to the joint 78 between the pipe sections 72, 74 while the pipe sections 72, 74 are welded together.

The pipe clamping module 180 may include a generally cylindrical support cage 188 that may be removably or permanently attached to the mounting shaft 40 of the mounting portion 39, such as with mechanical fasteners or welds. The support cage 188 may extend over a majority of the welding module 114 and extend beyond the joint 78. The support cage 188 may be coupled to the pipe sections 72, 74 by respective ring bearings 194, 196 such as, but not limited to, roller bearings, spherical roller bearings (able to handle angular deviation), rotation bearings, ball bearings, bushings, etc., disposed on longitudinally-opposite sides of the joint 78. The ring bearings 194, 196 allow free rotation of the pipe sections 72, 74 relative to the support cage 188.

The pipe clamping module 180 may further include clamping mechanisms 198. The clamping mechanisms 198 may include a plurality of circumferentially-spaced pads, tracks, feet or the like that may be radially extended and retracted relative to the support cage 188, such as via motorized actuation, to selectively engage and disengage the interior surfaces of the pipe sections 72, 74. For example, the clamping mechanisms 198 may be moved between a retracted position, wherein the clamping mechanisms 198 are positioned radially near or within the support cage 188, and a deployed position (shown in **FIG. 18**), wherein the clamping mechanisms 198 are radially extended from the support cage 88 to firmly engage and radially support, and thus align, the pipe sections 72, 74 at positions adjacent the joint 78. In some embodiments, the pipe clamping module 180 may additionally or alternatively include clamping mechanisms that may be longitudinally extended and retracted, such as for, aligning and/or engaging longitudinal ends of pipe sections 72, 74.

Referring to **FIG. 18****,** each clamping mechanism 198 is shown as being operatively associated with a pair of ring bearings 194a, 194b, 196a, 196b such as, but not limited to, roller bearings, spherical roller bearings (able to handle angular deviation), rotation bearings, ball bearings, bushings, etc. It is contemplated that each clamping mechanism 198 may be operatively associated with more or less ring bearings. For example, each clamping mechanism 190 may be coupled to the support cage 188 via a single bushing. In addition, as shown, each ring bearing 194, 196 may be coupled to the clamping mechanism 190 via an intermediate member 199, such as, for example, a pipe.

In use, when the device 100 is moved into position to weld the pipe sections 72, 74 together, with the welding head 35 positioned above the joint 78 as shown in **FIG. 18****,** the clamping mechanisms 198 may be moved to the deployed position to engage and internally clamp the pipe sections 72, 74. When the pipe sections 72, 74 are rotated about their axes during a welding operation (as described elsewhere), the support cage 188 remains fixedly static with respect to the welding module 114, mounting shaft 40 and boom 102. The pipe clamping module 180 may thereby provide the pipe sections 72, 74 with radial support, and thus alignment, on either longitudinal side of the joint 78 during a welding operation.

To longitudinally weld one or more pipe(s), the device 100 is coupled, according to the present invention, to the second end 106 of the boom 102, while the first end 104 of the boom 102 is coupled to the support 110. The pipe to be longitudinally weld may be placed onto the pipe rollers, which are movably located on the rails. The pipe rollers may then be moved longitudinally until the device 100 is properly positioned within the pipe. Next, the crawler unit 112 may be properly positioned by utilizing the motor 107, pinion 108 and rack 109. For example, the crawler unit 112 may be positioned such that the boom 102 can be evenly supported by the two lower wheels, *e.g.* where the top wheel is approximately positioned in the 12 o'clock position. Next, the_wheels 18a-c may be moved radially into engagement with the interior surface of the pipe. In this particular situation, the wheels 18a-c may only contact the interior surface of the pipe with moderate pressure to avoid clamping or by only radially expanding the two lower wheels to engage the interior surface of the pipe while the top wheel, which is approximately positioned in the 12 o'clock position, does not contact the interior surface of the pipe. Next, the pipe rollers 76 may be longitudinally translated along the rails. For example, the pipe rollers may be moved so that the pipe rollers 76 move away from the boom 102. With the weld head positioned in the 6 o clock position, as the pipe rollers 76 and hence the pipe moves, the pipe may be longitudinally welded. With longitudinal welding, the system may include a start and stop plate (not shown) extending a distance from the pipe to be welded to give support for the weld flux and make sure the start and end of weld is satisfactory. Upon completion, the start and stop plate may be removed.

The crawler unit 112 provides support for the welding module 114 and hence the welding head 35 by preventing or minimizing oscillation of the boom 102, the mounting shaft 40 and the welding module 114 that occurs with prior systems that incorporate an unsupported boom. With prior art systems that incorporate a simple unsupported boom, the boom can bend and oscillate while the device 100 is performing circumferential or longitudinal welding. Such oscillations can make it difficult or impossible to stabilize the welding head 35 in a manner suitable for obtaining a high-quality weld. This makes the present embodiment particularly beneficial for use with pipe lengths exceeding, for example 10 meters.

As used herein, an element or step recited in the singular and proceeded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

While certain embodiments of the disclosure have been described herein, it is not intended that the disclosure be limited thereto, as it is intended that the disclosure be as broad in scope as the art will allow and that the specification be read likewise. Therefore, the above description should not be construed as limiting, but merely as exemplifications of particular embodiments. Those skilled in the art will envision other modifications within the scope of the claims appended hereto.

## Claims

1. A welding device (100) comprising:
a support structure (110);
a boom (102) having a first end and a second end; wherein the boom (102) is sized and adapted for insertion into one or more pipe sections (72, 74), and wherein the first end of the boom (102) is coupled to the support structure (110) external to the one or more pipe sections (72, 74);
and being **characterised by** :
an angular adjustment mechanism (115) at said first boom end to permit a user to angle or tilt the entire boom (102) and the device (100) attached thereto within the one or more pipe sections (72, 74) to offset bending and elastic deformation of the boom (102);
a crawler module (112); and
a welding module (114) having a welding head (35) mounted thereon; and
a mounting shaft (40) having a first end and a second end, the first end of the mounting shaft (40) being coupled to the welding module (114), the second end of the mounting shaft (40) being coupled to the second end of the boom (102);
wherein the crawler module (112) is rotatable with respect to the boom (102) and welding module (114) such that the boom (102) and the welding module (114) can rotate in an opposite direction and at a same rotational speed relative to a direction and rotational speed of the crawler module (112) to maintain an angular position of the welding head (35).

2. The welding device (100) of claim 1, wherein the boom (102) further includes a motor (107) adjacent to the second end thereof, the motor (107) coupled to a gear on the crawler module (112), the motor (107) being configured to rotate the crawler module (112) at the same rotational speed and in the opposite direction relative to the boom (102) and welding module (114).

3. The welding device (100) of claim 1, further comprising first and second ring bearings (140, 142) for coupling the mounting shaft (40) to the crawler module (112) so that the crawler module (112) is rotatable with respect to the mounting shaft (40), the boom (102) and the welding module (114).

4. The welding device (100) of claim 1, further comprising:
one or more pipe sections (72, 74);
a rail (77); and
a plurality of pipe rollers (76a-d) movably located on the rail (77) and operative to rotate the one or more pipe sections (72, 74);
wherein the welding device (100) is sized and configured to be inserted into the one or more pipe sections (72, 74) by moving the pipe rollers (76a-d) with respect to the rail (77).

5. The welding device (100) of claim 1, further comprising a pipe clamping module (180) attached to the mounting shaft (40) so that the pipe clamping module is static and non-rotatably coupled to the welding module (114) and wherein the pipe clamping module (180) is adapted and configured to provide radial support and thus alignment adjacent the joint (78) between the pipe sections (72, 74) while the pipe sections (72, 74) are welded together.

6. The welding device (100) of claim 5, wherein the pipe clamping module (180) includes a support cage (188), first and second bearings (194, 196) disposed on longitudinally-opposite sides of the joint (78), the bearings (194, 196) enabling rotation of the first and second pipe sections (72, 74) relative to the support cage (188).

7. The welding device (100) of claim 5, wherein the pipe clamping module (180) further includes a plurality of clamping mechanisms (198) that are radially extendable relative to the support cage (188) to selectively engage and disengage from an interior surface of the pipe sections (72, 74).

8. The welding device (100) of claim 1 further comprising plural roller units (16a, 16b) located adjacent the front and rear ends of the crawler module (112) adapted to concentrically center the device (100) within a pipe section (72, 74), while allowing the device (100) to move longitudinally through the pipe sections (72, 74), each roller unit (16a, 16b) comprising respective sets of positioning wheels (18a-c, 19a-c), wheel arms (20a-c, 21a-c) and drive mechanisms (22a-c, 23a-c).

9. The welding device (100) of claim 1 wherein the boom (102) comprises a plurality of longitudinal telescopically engaged segments permitting selective longitudinal movement of the first boom end within the one or more pipe sections (72, 74).

10. A method of welding one or more pipe sections (72, 74) using a pipe crawling welding device (100), the method comprising:
placing one or more pipe sections (72, 74) to be welded at a welding location onto a plurality of pipe (76a-d), wherein the pipe rollers (76a-d) are movably located on a rail (77); securing a first end of a boom (102) associated with the device (100) to a support structure (110) external to said one or more pipe sections (72, 74);
positioning the device (100) into the one or more pipe sections (72, 74) so that a welding head (35) associated with the device (100) is properly positioned at the welding location;
and being **characterised by** the following steps :
offsetting bending or elastic deformation of the boom (102) by angularly adjusting the boom (102) from said first boom end;
securing a crawler module (112) associated with the device (100) against rotational movement relative to the first pipe section (72);
activating the welding head (35);
rotating the one or more pipe sections (72, 74) at a first speed and in a first direction about a common axis; and
rotating the welding head (35) about the common axis at a second speed that is equal to the first speed and in a second direction that is opposite the first direction to maintain an angular position of the welding head (35).

11. The method of claim 10, wherein the device (100) is positioned by moving the pipe rollers (76a-d), and hence the one or more pipe sections (72, 74), with respect to the rail (77).

12. The method of claim 10, wherein the welding head (35) is properly positioned when the welding head (35) is located at the welding location adjacent an annular joint corresponding to an axial abutment of between two of the said pipe sections (72, 74).

13. The method of claim 12 further comprising clamping said two of said pipe sections (72, 74) together by providing radial support on opposite sides of said annular joint.

14. The method of claim 12, wherein the welding head (35) is properly positioned when the welding head (35) is located at the welding location corresponding to a longitudinal joint in a pipe section (72, 74).

15. The method of claim 10, wherein rotating the one or more pipe sections (72, 74) at a first speed and in a first direction about a common axis is done by rotating the one or more pipe sections (72, 74) via the pipe rollers (76a-d).

## Patentansprüche

1. Eine Schweißvorrichtung (100), die Folgendes beinhaltet:
eine Stützstruktur (110);
einen Ausleger (102), der ein erstes Ende und ein zweites Ende aufweist;
wobei der Ausleger (102) zum Einführen in einen oder mehrere Rohrabschnitte (72, 74) bemessen und angepasst ist, und wobei das erste Ende des Auslegers (102) mit der Stützstruktur (110) außerhalb des einen oder der mehreren Rohrabschnitte (72, 74) gekoppelt ist;
und durch Folgendes gekennzeichnet ist:
einen Winkeleinstellmechanismus (115) an dem ersten Auslegerende, um es einem Benutzer zu ermöglichen, den gesamten Ausleger (102) und die daran befestigte Vorrichtung innerhalb des einen oder der mehreren Rohrabschnitte (72, 74) abzuwinkeln oder zu kippen, um ein Biegen und ein elastisches Verformen des Auslegers (102) auszugleichen;
ein Raupenmodul (112); und
ein Schweißmodul (114), das einen darauf montierten Schweißkopf (35) aufweist; und
eine Montagewelle (40), die ein erstes Ende und ein zweites Ende aufweist, wobei das erste Ende der Montagewelle (40) mit dem Schweißmodul (114) gekoppelt ist und das zweite Ende der Montagewelle (40) mit dem zweiten Ende des Auslegers (102) gekoppelt ist;
wobei das Raupenmodul (112) in Bezug auf den Ausleger (102) und das Schweißmodul (114) drehbar ist, sodass sich der Ausleger (102) und das Schweißmodul (114) in einer entgegengesetzten Richtung und mit der gleichen Drehgeschwindigkeit relativ zu einer Richtung und Drehgeschwindigkeit des Raupenmoduls (112) drehen können, um eine Winkelposition des Schweißkopfes (35) beizubehalten.

2. Schweißvorrichtung (100) gemäß Anspruch 1, wobei der Ausleger (102) ferner einen Motor (107) neben dem zweiten Ende davon umfasst, wobei der Motor (107) mit einem Zahnrad an dem Raupenmodul (112) gekoppelt ist, wobei der Motor (107) konfiguriert ist, um das Raupenmodul (112) mit der gleichen Drehgeschwindigkeit und in der entgegengesetzten Richtung relativ zu dem Ausleger (102) und dem Schweißmodul (114) zu drehen.

3. Schweißvorrichtung (100) gemäß Anspruch 1, ferner beinhaltend ein erstes und ein zweites Ringlager (140, 142) zum Koppeln der Montagewelle (40) mit dem Raupenmodul (112), sodass das Raupenmodul (112) in Bezug auf die Montagewelle (40), den Ausleger (102) und das Schweißmodul (114) drehbar ist.

4. Schweißvorrichtung (100) gemäß Anspruch 1, die ferner Folgendes beinhaltet:
einen oder mehrere Rohrabschnitte (72, 74);
eine Schiene (77); und
eine Vielzahl von Rohrrollen (76a-d), die sich beweglich auf der Schiene (77) befinden und betriebsfähig sind, um den einen oder die mehreren Rohrabschnitte (72, 74) zu drehen;
wobei die Schweißvorrichtung (100) bemessen und konfiguriert ist, um sie in den einen oder die mehreren Rohrabschnitte (72, 74) einzuführen, indem die Rohrrollen (76a-d) in Bezug auf die Schiene (77) bewegt werden.

5. Schweißvorrichtung (100) gemäß Anspruch 1, ferner beinhaltend ein Rohrklemmmodul (180), das an der Montagewelle (40) befestigt ist, sodass das Rohrklemmmodul statisch und nicht drehbar mit dem Schweißmodul (114) gekoppelt ist, wobei das Rohrklemmmodul (180) angepasst und konfiguriert ist, um eine radiale Abstützung und somit eine Ausrichtung neben der Verbindung (78) zwischen den Rohrabschnitten (72, 74) bereitzustellen, während die Rohrabschnitte zusammengeschweißt werden.

6. Schweißvorrichtung (100) gemäß Anspruch 5, wobei das Rohrklemmmodul (180) einen Stützkäfig (188), ein erstes und ein zweites Lager (194, 196), die an longitudinal entgegengesetzten Seiten der Verbindung (78) angeordnet sind, umfasst, wobei die Lager (194, 196) eine Drehung des ersten und des zweiten Rohrabschnitts (72, 74) relativ zu dem Stützkäfig (188) erlauben.

7. Schweißvorrichtung (100) gemäß Anspruch 5, wobei das Rohrklemmmodul (180) ferner eine Vielzahl von Klemmmechanismen (198) umfasst, die relativ zu dem Stützkäfig (188) radial ausfahrbar sind, um selektiv von einer Innenfläche der Rohrabschnitte (72, 74) einzugreifen oder den Eingriff zu lösen.

8. Schweißvorrichtung (100) gemäß Anspruch 1, ferner beinhaltend viele Rolleneinheiten (16a, 16b), die sich neben dem vorderen und hinteren Ende des Raupenmoduls (112) befinden, angepasst, um die Vorrichtung (100) innerhalb eines Rohrabschnitts (72, 74) konzentrisch zu zentrieren, wobei die Vorrichtung (100) sich longitudinal durch die Rohrabschnitte (72, 74) bewegen kann, wobei jede Rolleneinheit (16a, 16b) jeweilige Sätze von Positionierrädern (18a-c, 19a-c), Radarmen (20a-c, 21a-c) und Antriebsmechanismen (22a-c, 23a-c) beinhaltet.

9. Schweißvorrichtung (100) gemäß Anspruch 1, wobei der Ausleger (102) eine Vielzahl von longitudinalen teleskopisch im Eingriff stehenden Segmenten beinhaltet, die eine selektive longitudinale Bewegung des ersten Auslegerendes innerhalb des einen oder der mehreren Rohrabschnitte (72, 74) ermöglichen.

10. Ein Verfahren zum Schweißen eines oder mehrerer Rohrabschnitte (72, 74) unter Verwendung einer Rohrraupenschweißvorrichtung (100), wobei das Verfahren Folgendes beinhaltet:
Platzieren eines oder mehrerer Rohrabschnitte (72, 74), die an einer Schweißstelle auf eine Vielzahl von Rohren (76a-d) zu schweißen sind, wobei sich die Rohrrollen (76a-d) beweglich auf einer Schiene (77) befinden;
Sichern eines ersten Endes eines Auslegers (102), der mit der Vorrichtung (100) assoziiert ist, an einer Stützstruktur (110) außerhalb des einen oder der mehreren Rohrabschnitte (72, 74);
Positionieren der Vorrichtung (100) in dem einen oder den mehreren Rohrabschnitten (72, 74), sodass ein Schweißkopf (35), der mit der Vorrichtung (100) assoziiert ist, richtig an der Schweißstelle positioniert ist;
und wobei es durch die folgenden Schritte gekennzeichnet ist:
Ausgleichen des Biegens oder der elastischen Verformung des Auslegers (102) durch winkliges Einstellen des Auslegers (102) von dem ersten Auslegerende;
Sichern eines Raupenmoduls (112), das mit der Vorrichtung (100) assoziiert ist, gegen eine Drehbewegung relativ zu dem ersten Rohrabschnitt (72);
Aktivieren des Schweißkopfes (35);
Drehen des einen oder der mehreren Rohrabschnitte (72, 74) bei einer ersten Geschwindigkeit und in einer ersten Richtung um eine gemeinsame Achse; und
Drehen des Schweißkopfes (35) um die gemeinsame Achse mit einer zweiten Geschwindigkeit, die gleich der ersten Geschwindigkeit ist, und in einer zweiten Richtung, die der ersten Richtung entgegengesetzt ist, um eine Winkelposition des Schweißkopfes (35) beizubehalten.

11. Verfahren gemäß Anspruch 10, wobei die Vorrichtung (100) positioniert wird, indem die Rohrrollen (76a-d) und somit der eine oder die mehreren Rohrabschnitte (72, 74) in Bezug auf die Schiene (77) bewegt werden.

12. Verfahren gemäß Anspruch 10, wobei der Schweißkopf (35) richtig positioniert ist, wenn sich der Schweißkopf (35) an der Schweißstelle neben einer Ringverbindung befindet, die einem axialen Anschlag zwischen zwei der Rohrabschnitte (72, 74) entspricht.

13. Verfahren gemäß Anspruch 12, ferner beinhaltend das Zusammenklemmen der zwei Rohrabschnitte (72, 74) durch Bereitstellen einer radialen Stütze an entgegengesetzten Seiten der Ringverbindung.

14. Verfahren gemäß Anspruch 12, wobei der Schweißkopf (35) richtig positioniert ist, wenn sich der Schweißkopf (35) an der Schweißstelle befindet, die einer longitudinalen Verbindung in einem Rohrabschnitt (72, 74) entspricht.

15. Verfahren gemäß Anspruch 10, wobei ein Drehen des einen oder der mehreren Rohrabschnitte (72, 74) bei einer ersten Geschwindigkeit und in einer ersten Richtung um eine gemeinsame Achse durch Drehen des einen oder der mehreren Rohrabschnitte (72, 74) über die Rohrrollen (76a-d) geschieht.

## Revendications

1. Un dispositif de soudage (100) comprenant :
une structure de support (110) ;
une flèche (102) ayant une première extrémité et une deuxième extrémité ;
dans lequel la flèche (102) est dimensionnée et conçue pour une insertion dans une ou plusieurs sections de conduite (72, 74), et dans lequel la première extrémité de la flèche (102) est couplée à la structure de support (110) à l'extérieur des une ou plusieurs sections de conduite (72, 74) ;
et étant **caractérisé par** :
un mécanisme de réglage angulaire (115) au niveau de ladite première extrémité de flèche afin de permettre à un utilisateur d'incliner ou de basculer la flèche tout entière (102) et le dispositif (100) attaché à celle-ci au sein des une ou plusieurs sections de conduite (72, 74) jusqu'à fléchissement décalé et déformation élastique de la flèche (102) ;
un module à chenille (112) ; et
un module de soudage (114) ayant une tête de soudage (35) montée sur celui-ci ; et
un arbre de montage (40) ayant une première extrémité et une deuxième extrémité, la première extrémité de l'arbre de montage (40) étant couplée au module de soudage (114), la deuxième extrémité de l'arbre de montage (40) étant couplée à la deuxième extrémité de la flèche (102) ;
dans lequel le module à chenille (112) est rotatif par rapport à la flèche (102) et au module de soudage (114) de telle sorte que la flèche (102) et le module de soudage (114) peuvent tourner dans une direction opposée et à une même vitesse de rotation relativement à une direction et à une vitesse de rotation du module à chenille (112) afin de maintenir une position angulaire de la tête de soudage (35).

2. Le dispositif de soudage (100) de la revendication 1, dans lequel la flèche (102) inclut en outre un moteur (107) adjacent à la deuxième extrémité de celle-ci, le moteur (107) étant couplé à un engrenage sur le module à chenille (112), le moteur (107) étant configuré pour faire tourner le module à chenille (112) à la même vitesse de rotation et dans la direction opposée relativement à la flèche (102) et au module de soudage (114).

3. Le dispositif de soudage (100) de la revendication 1, comprenant en outre des premiers et deuxièmes roulements de bague (140, 142) pour coupler l'arbre de montage (40) au module à chenille (112) de sorte que le module à chenille (112) est rotatif par rapport à l'arbre de montage (40), à la flèche (102) et au module de soudage (114).

4. Le dispositif de soudage (100) de la revendication 1, comprenant en outre :
une ou plusieurs sections de conduite (72, 74) ;
un rail (77) ; et
une pluralité de rouleaux de conduite (76a-d) placés de façon déplaçable sur le rail (77) et opérationnels pour faire tourner les une ou plusieurs sections de conduite (72, 74) ;
dans lequel le dispositif de soudage (100) est dimensionné et configuré pour être inséré dans les une ou plusieurs sections de conduite (72, 74) en déplaçant les rouleaux de conduite (76a-d) par rapport au rail (77).

5. Le dispositif de soudage (100) de la revendication 1, comprenant en outre un module de serrage de conduite (180) attaché à l'arbre de montage (40) de sorte que le module de serrage de conduite est statique et couplé de façon non rotative au module de soudage (114) et le module de serrage de conduite (180) étant conçu et configuré pour apporter un support radial et dès lors un alignement de façon adjacente au joint (78) entre les sections de conduite (72, 74) tandis que les sections de conduite (72, 74) sont soudées l'une à l'autre.

6. Le dispositif de soudage (100) de la revendication 5, dans lequel le module de serrage de conduite (180) inclut une cage de support (188), des premiers et deuxièmes roulements (194, 196) disposés sur des côtés du joint (78) opposés de façon longitudinale, les roulements (194, 196) rendant possible la rotation des première et deuxième sections de conduite (72, 74) relativement à la cage de support (188).

7. Le dispositif de soudage (100) de la revendication 5, dans lequel le module de serrage de conduite (180) inclut en outre une pluralité de mécanismes de serrage (198) qui peuvent être allongés de façon radiale relativement à la cage de support (188) afin de se mettre en prise et se mettre hors de prise de façon sélective avec une surface intérieure des sections de conduite (72, 74).

8. Le dispositif de soudage (100) de la revendication 1 comprenant en outre des unités de rouleaux plurielles (16a, 16b) placées de façon adjacente aux extrémités avant et arrière du module à chenille (112) conçues pour centrer le dispositif (100) de façon concentrique au sein d'une section de conduite (72, 74), tout en autorisant le dispositif (100) à se déplacer de façon longitudinale à travers les sections de conduite (72, 74), chaque unité de rouleau (16a, 16b) comprenant des ensembles respectifs de roues de positionnement (18a-c, 19a-c), des rayons de roues (20a-c, 21a-c) et des mécanismes d'entraînement (22a-c, 23a-c).

9. Le dispositif de soudage (100) de la revendication 1 dans lequel la flèche (102) comprend une pluralité de segments longitudinaux mis en prise de façon télescopique permettant un déplacement longitudinal sélectif de la première extrémité de flèche au sein des une ou plusieurs sections de conduite (72, 74).

10. Un procédé de soudage d'une ou plusieurs sections de conduite (72, 74) à l'aide d'un dispositif de soudage (100) évoluant en chenille dans une conduite, le procédé comprenant :
le placement d'une ou plusieurs sections de conduite (72, 74) devant être soudées au niveau d'un emplacement de soudage sur une pluralité de conduite (76a-d), dans lequel les rouleaux de conduite (76a-d) sont placés de façon déplaçable sur un rail (77) ;
l'assujettissement d'une première extrémité d'une flèche (102) associée au dispositif (100) à une structure de support (110) à l'extérieur desdites une ou plusieurs sections de conduite (72, 74) ;
le positionnement du dispositif (100) dans les une ou plusieurs sections de conduite (72, 74) de sorte qu'une tête de soudage (35) associée au dispositif (100) soit correctement positionnée au niveau de l'emplacement de soudage ;
et étant **caractérisé par** les étapes suivantes :
de décalage du fléchissement ou de la déformation élastique de la flèche (102) en réglant de façon angulaire la flèche (102) de ladite première extrémité de flèche ;
d'assujettissement d'un module à chenille (112) associé au dispositif (100) afin d'empêcher le déplacement en rotation relativement à la première section de conduite (72) ;
d'activation de la tête de soudage (35) ;
de rotation des une ou plusieurs sections de conduite (72, 74) à une première vitesse et dans une première direction autour d'un axe commun ; et
de rotation de la tête de soudage (35) autour de l'axe commun à une deuxième vitesse qui est égale à la première vitesse et dans une deuxième direction qui est opposée à la première direction afin de maintenir une position angulaire de la tête de soudage (35).

11. Le procédé de la revendication 10, dans lequel le dispositif (100) est positionné en déplaçant les rouleaux de conduite (76a-d), et donc les une ou plusieurs sections de conduite (72, 74), par rapport au rail (77).

12. Le procédé de la revendication 10, dans lequel la tête de soudage (35) est correctement positionnée lorsque la tête de soudage (35) est placée au niveau de l'emplacement de soudage de façon adjacente à un joint annulaire correspondant à une butée axiale d'entre deux desdites sections de conduite (72, 74).

13. Le procédé de la revendication 12 comprenant en outre le serrage desdites deux sections parmi lesdites sections de conduite (72, 74) l'une à l'autre en apportant un support radial à des côtés opposés dudit joint annulaire.

14. Le procédé de la revendication 12, dans lequel la tête de soudage (35) est correctement positionnée lorsque la tête de soudage (35) est placée au niveau de l'emplacement de soudage correspondant à un joint longitudinal dans une section de conduite (72, 74).

15. Le procédé de la revendication 10, dans lequel la rotation des une ou plusieurs sections de conduite (72, 74) à une première vitesse et dans une première direction autour d'un axe commun est effectuée en faisant tourner les une ou plusieurs sections de conduite (72, 74) par l'intermédiaire des rouleaux de conduite (76a-d).
